Europäisches Patentamt

European Patent Office

Office européen des brevets

(19)

(11) EP 0 465 903 B1

(12) **FASCICULE DE BREVET EUROPEEN**

(45) Date de publication et mention
de la délivrance du brevet:
**02.10.1996 Bulletin 1996/40**

(51) Int Cl.$^6$: **G05F 1/38**

(21) Numéro de dépôt: **91110344.8**

(22) Date de dépôt: **22.06.1991**

(54) **Procédé magnétique de controle du transfert d'énergie dans un convertisseur statique**

Magnetisches Steuerverfahren von Energieübertragung in einem statischen Konverter

Magnetic control method of energy transfer in a static converter

(84) Etats contractants désignés:
AT BE CH DE DK ES FR GB GR IT LI LU NL SE

(30) Priorité: 13.07.1990 CH 2343/90
05.03.1991 CH 664/91

(43) Date de publication de la demande:
15.01.1992 Bulletin 1992/03

(73) Titulaires:
• **Bonnet, André**
**F-13360 Roquevaire (FR)**
• **Danner, Jean-Pierre**
**F-13600 La Ciotat (FR)**

(72) Inventeurs:
• **Bonnet, André**
**F-13360 Roquevaire (FR)**
• **Danner, Jean-Pierre**
**F-13600 La Ciotat (FR)**

(74) Mandataire: **Micheli & Cie**
**Rue de Genève 122,**
**Case Postale 61**
**1226 Genève-Thonex (CH)**

(56) Documents cités:
EP-A- 0 191 482       EP-A- 0 255 844
US-A- 4 342 075       US-A- 4 864 478

## Description

La présente invention a pour objet un procédé magnétique de contrôle du transfert d'énergie dans un convertisseur statique comprenant une entrée et une sortie, au moins un transformateur muni d'enroulements primaire et secondaire bobinés sur un circuit magnétique du transformateur, un circuit de réglage destiné à régler ledit transfert d'énergie et une source de courant alternatif appliquée à l'enroulement primaire du transformateur.

Il est connu, par exemple du brevet US 4,342,075 de commander la puissance délivrée par le secondaire d'un convertisseur statique en agissant sur le flux de fuite d'un transformateur.

Dans ce brevet, le transformateur comprend un circuit magnétique principal associé à un circuit magnétique auxiliaire. L'enroulement primaire du transformateur est bobiné sur une branche commune du circuit magnétique principal et auxiliaire et l'enroulement secondaire du transformateur est bobiné sur une branche du circuit principal. Le transformateur comprend un circuit de réglage avec un enroulement auxiliaire bobiné sur le circuit magnétique auxiliaire. Lorsque le circuit auxiliaire est mis à saturation par le circuit de réglage, tout le flux magnétique engendré par l'enroulement primaire passe par l'enroulement secondaire de façon à obtenir un transfert d'énergie complet, tandis que lorsque le circuit magnétique auxiliaire n'est pas mis à saturation, une partie du flux magnétique engendré par l'enroulement primaire circule dans ce circuit magnétique auxiliaire formant un flux de fuite permettant de régler le transfert d'énergie. Cette construction implique une modification du circuit magnétique du transformateur et l'utilisation d'un enroulement de commande alimenté par un dispositif de commande ou de contrôle du transfert d'énergie.

La demande de brevet EP A 0.255.844 décrit un générateur comportant un circuit magnétique avec un enroulement primaire et des enroulements secondaires et un circuit de contrôle élaborant un signal de commande utilisé pour déterminer la durée de conduction de l'interrupteur principal du générateur selon une régulation par modulation de la largeur d'impulsion (P.W.M.). Ce générateur comprend en outre un circuit de bridage avec un enroulement secondaire complémentaire relié à une self additionnelle pouvant être saturée lorsque la puissance à la sortie du générateur doit être maximale. Dans ce générateur, le circuit de réglage n'agit pas directement sur l'état magnétique et la saturation du transformateur.

La présente invention a pour but la réalisation d'un procédé magnétique de contrôle du transfert d'énergie dans un convertisseur statique ne nécessitant ni circuit magnétique auxiliaire ni enroulement auxiliaire ou de commande de manière à réduire le coût de tels convertisseurs statiques qui peuvent alors utiliser des transformateurs courants.

Le procédé magnétique de contrôle du transfert d'énergie dans un convertisseur statique selon l'invention se distingue par les caractéristiques énumérées à la revendication 1.

Le dessin annexé illustre le principe du procédé selon l'invention ainsi que deux modes de mise en oeuvre de celui-ci.

La figure 1 illustre la structure du principe du procédé selon l'invention.

La figure 2 illustre un modèle équivalent simplifié expliquant le principe de fonctionnement d'un transformateur d'intensité utilisé dans le convertisseur statique.

Les figures 3a et 3b illustrent le flux magnétique en fonction du courant magnétisant, sans saturation au cours d'une période, respectivement avec saturation pendant une partie de la période de fonctionnement.

La figure 4 représente une première forme d'exécution d'un convertisseur statique pour la mise en oeuvre du procédé selon l'invention.

Les figures 5a et 5b illustrent des formes d'ondes de différents paramètres lorsque le convertisseur représenté à la figure 4 est chargé respectivement peu chargé.

La figure 6 illustre la possibilité d'associer plusieurs transformateurs en série, chacun étant régulé séparemment.

La figure 7a illustre une première variante d'un second mode de réalisation d'un convertisseur statique pour la mise en oeuvre du procédé selon l'invention.

La figure 7b illustre une seconde variante du second mode de réalisation d'un convertisseur statique pour la mise en oeuvre du procédé selon l'invention.

Les figures 8a et 8b illustrent les formes d'ondes de certains paramètres lorsque le convertisseur selon la figure 7 est chargé respectivement peu chargé.

Les figures 9a, 9b et 9c sont des schémas blocs d'une forme d'exécution des circuits régulateurs C,C' respectivement C" des formes d'exécution illustrées aux figures 4, 7a et 7b respectivement.

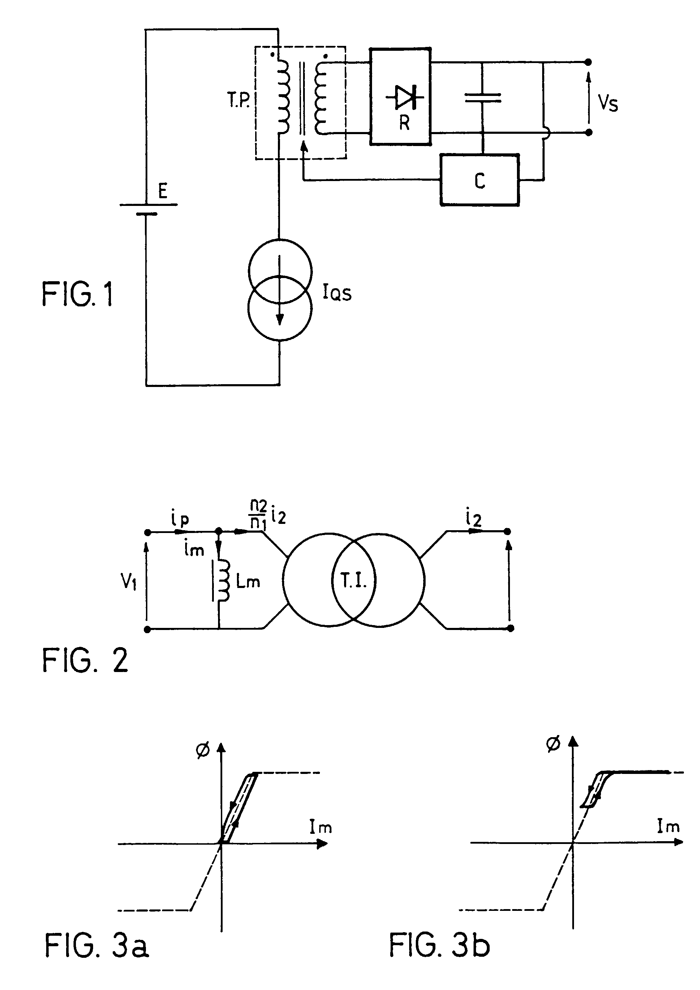

La figure 1 représente la structure de principe du procédé magnétique de contrôle du transfert d'énergie selon l'invention.

E est une source de tension qui alimente le circuit. Elle peut être obtenue soit par redressement et filtrage d'un réseau alternatif, soit à partir d'une quelconque source d'énergie continue.

IQS est un générateur de courant quasi sinusoïdal. Dans les exemples de réalisation présentés ci-après, IQS est basé sur une structure monointerrupteur à résonance série. Ce générateur de courant IQS alimente un transformateur d'intensité saturable T.P.

R est un redresseur qui peut être simple ou double alternance.

C est un circuit de contrôle d'une grandeur de sortie, tension, courant, puissance, ... etc, qui permet de maitriser l'état magnétique du transformateur d'intensité saturable T.P.

Pour expliquer le principe de fonctionnement du transformateur d'intensité selon l'invention, référence est faite au modèle équivalent simplifié de la figure 2, dans lequel Lm est l'inductance magnétisante et T.I. un transformateur d'intensité parfait comportant n1 spires au primaire et n2 spires au secondaire.

La loi des noeuds donne : Ip = Im + (I2 . n2/n1)

Si le circuit magnétique du transformateur est saturé, Lm tend vers zéro et Ip = Im. Il ne passe pas d'énergie vers le secondaire du transformateur.

Si le circuit magnétique n'est pas saturé, Lm a une valeur finie telle que Im soit très petit par rapport à Ip. Alors, Ip = I2 . n2/n1 et l'énergie est transmise au secondaire.

Il faut rappeler que la tension moyenne sur une période aux bornes d'un enroulement de transformateur en régime permanent établi est égale à zéro. Ceci est vrai pour tout enroulement de faible résistance interne, aussi bien au primaire, au secondaire, que pour un bobinage auxiliaire.

Selon le présent procédé le circuit de contrôle permet de faire varier la tension moyenne aux bornes d'un bobinage en régime transitoire. Ainsi, le matériau magnétique est amené progressivement à sa saturation. On agit donc sur la saturation du matériau magnétique par le circuit de contrôle faisant varier la tension en régime transitoire aux bornes de l'enroulement primaire ou secondaire du transformateur. Selon ce procédé il n'est donc plus nécessaire de disposer d'un enroulement auxiliaire de magnétisation. On peut donc utiliser un transformateur d'intensité usuel.

En effet, on peut contrôler la démagnétisation du circuit magnétique par la valeur minimale du courant magnétisant Im selon trois possibilités :

- En réglant l'amplitude de la tension aux bornes du bobinage primaire ou secondaire pendant la phase de démagnétisation.
- Sous tension constante, en jouant sur la durée de la démagnétisation.
- Par combinaison des deux actions ci-dessus.

On peut suivre aux figures 3a et 3b illustrant le flux magnétique $\phi$ fonction du courant magnétisant Im du matériau, l'évolution de son état magnétique. Au cours d'une période, il n'y a pas saturation dans l'exemple de la figure 3a. Il y a saturation pendant une partie de la période de fonctionnement dans l'exemple de la figure 3b.

Le régulateur C, ajuste à chaque période, soit la tension de démagnétisation, soit la durée de démagnétisation optimale, soit la bonne combinaison de ces deux paramètres en fonction du transfert d'énergie désiré.

Ainsi, au cours de chaque période de fonctionnement, le transformateur d'intensité est saturé pendant une durée variant en fonction de l'énergie à transmettre au secondaire pour régler la grandeur de sortie souhaitée.

Le transformateur d'intensité est fabriqué de la même façon qu'un transformateur usuel, le circuit magnétique est de forme torique ou constitué de pièces en forme de U, de E, de I ... etc. Les bobinages peuvent être entrelacés ou non, concentriques ou en galettes, montés sur la même jambe du circuit magnétique ou sur différentes portions. Il ne comporte pas de circuit auxiliaire de contrôle ou de magnétisation.

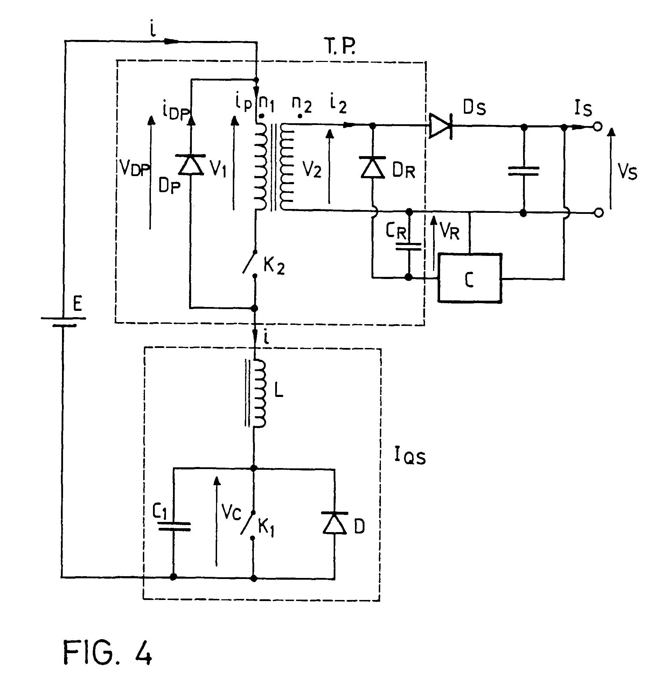

La figure 4 représente un premier exemple de réalisation de convertisseur statique dont le transfert d'énergie est contrôlé selon le procédé de la présente invention.

Le principe de régulation utilisé dans cet exemple consiste à faire varier la tension de démagnétisation Vr grâce au régulateur C.

Les composants K1, C1, D et L constituent la source de courant IQS quasi sinusoïdal d'amplitude constante.

K1 est un interrupteur qui est ouvert lorsque i atteint une valeur I1 fixée par le concepteur lors du dimensionnement du convertisseur statique. Puis le courant i entre dans une phase oscillatoire, finit par devenir négatif et passe dans la diode D dès que la tension aux bornes du condensateur C1 est nulle. K1 est fermé lorsque i tend à redevenir positif, une nouvelle période commence. La technologie de K1 peut être par exemple à transistor bipolaire ou MOS FET indifféremment.

Les composants K2, Dp, Ds, Dr et C constituent le circuit de commande de l'état magnétique du transformateur.

K2 est un interrupteur commandé (toute technologie peut convenir). Sa puissance apparente est très faible par rapport à celle de K1. Il se ferme si le courant i est positif et s'ouvre si i est négatif.

Le courant Ip dans le primaire du transformateur ne peut être que positif.

La diode Dp assure la continuité du courant i pendant son alternance négative.

Il suffit d'une seule diode Ds de redressement au secondaire. Celle-ci conduit lorsque Ip est positif et que le transformateur n'est pas saturé.

La diode Dr permet la démagnétisation du matériau magnétique pendant l'alternance négative du courant i et que l'interrupteur K2 est donc ouvert.

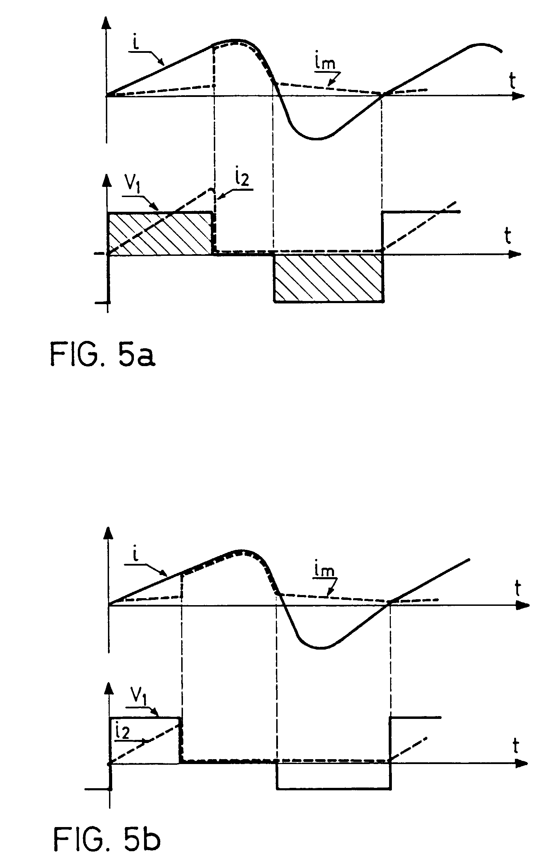

Le circuit de contrôle C règle la valeur de la tension de démagnétisation Vr sous laquelle se fait la démagnétisation. On obtient ainsi les formes d'ondes des figures 5a convertisseur chargé et 5b convertisseur peu chargé.

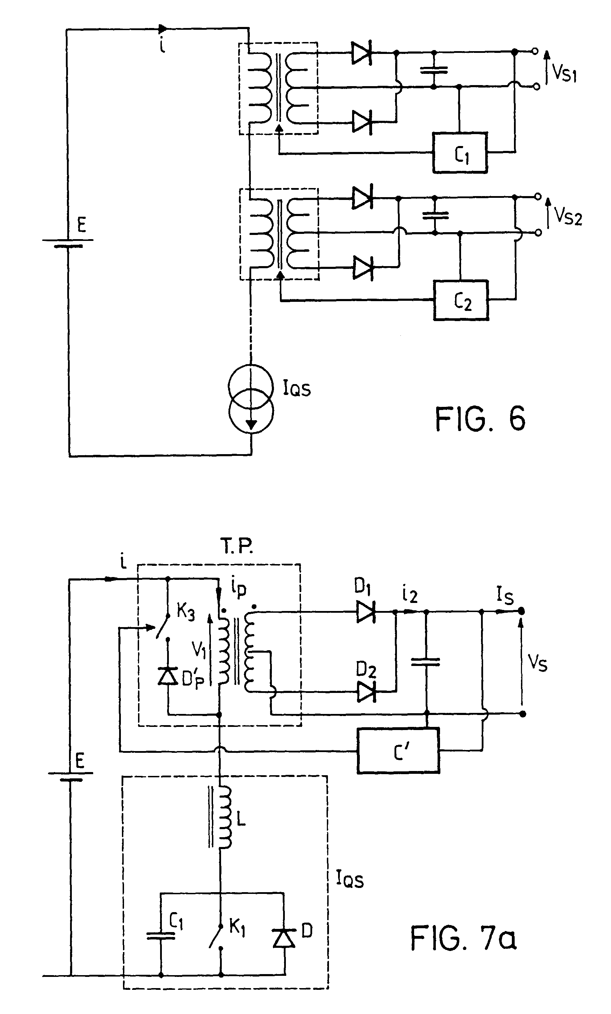

Il est à noter que plusieurs transformateurs peuvent être associés en série mais régulés chacun séparemment, selon le schéma de la figure 6.

On voit dans cette figure que les enroulements primaires de plusieurs transformateurs de courant TP1, TP2... sont branchés en série avec la source de tension E et le générateur d'intensité quasi-sinusoïdal IQS.

L'enroulement secondaire de chacun de ces transformateurs alimente un circuit de contrôle C1, C2,... commandant la démagnétisaton du circuit magnétique du transformateur correspondant.

Ainsi chacun des transformateurs est régulé selon le procédé de contrôle magnétique du transfert d'énergie selon la présente invention. Il est évident que chaque transformateur TP1, TP2... peut présenter plusieurs sorties.

On peut ainsi, avec un seul interrupteur principal, réaliser une alimentation multi-sorties avec des régulations indépendantes de certaines de ces sorties.

Par exemple, pour un téléviseur, il est possible de réguler dans la structure à résonance monointerrupteur décrite, d'une part les alimentations basse tension des circuits électroniques et, d'autre part, les tensions d'accéet de déviation des plaques (T.H.T.) tout en respectant les distances d'isolement.

La figure 7a représente une première variante d'un deuxième exemple de réalisation de convertisseur statique pour la mise en oeuvre du procédé.

Le principe de régulation utilisé dans cet exemple consiste à faire varier la durée de la phase de démagnétisation par un régulateur C' qui agit sur l'interrupteur K3.

Les composants K1, L, C1 et D constituent la source de courant IQS décrite en référence au premier exemple.

L'interrupteur K3, en parallèle avec l'enroulement primaire du transformateur d'intensité T.P., est commandé par le régulateur C' pendant l'alternance négative du courant i. Lorsqu'on veut transmettre la puissance maximale à la sortie, K3 est toujours ouvert au cours de la période. Si la puissance à fournir diminue, le régulateur C' ferme l'interrupteur K3 au cours de l'alternance négative du courant i pendant une durée déterminée en fonction du transfert d'énergie désiré.

Lorsque le courant Ip au primaire est positif, la diode D1 conduit si le transformateur n'est pas saturé.

Lorsque le courant Ip est négatif, la diode D2 conduit si l'interrupteur K3 est ouvert. Par contre si K3 est fermé, le courant magnétisant Im prend l'amplitude de Ip et la diode D2 est bloquée.

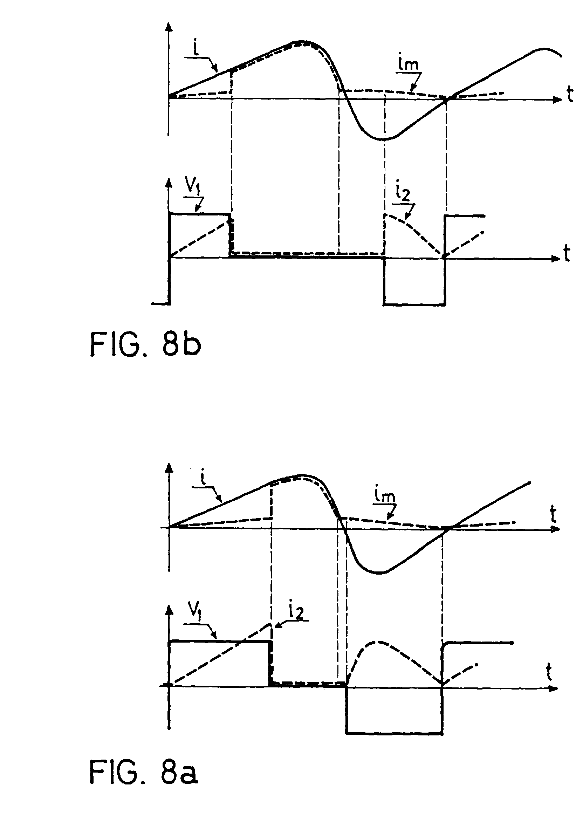

On obtient les formes d'ondes des figures 8a (convertisseur chargé) et 8b (convertisseur peu chargé).

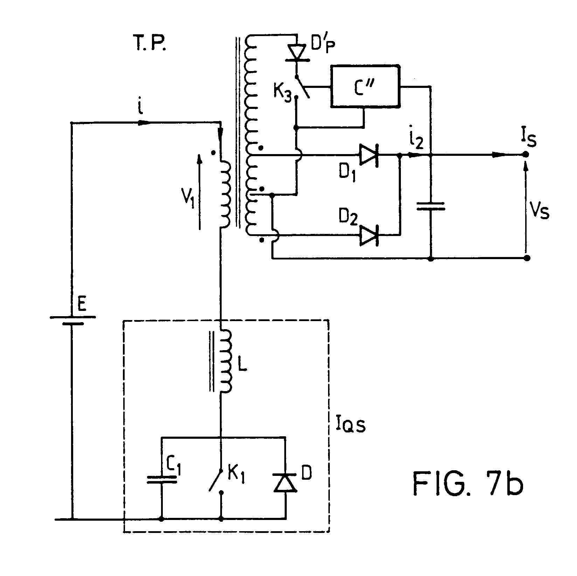

La figure 7b illustre une seconde variante du second exemple de réalisation d'un convertisseur statique pour la mise en oeuvre du procédé dans laquelle l'interrupteur K3 et la diode D'p sont en parallèles avec l'enroulement secondaire du transformateur d'intensité T.P.

Le principe de régulation utilisé dans cette variante consiste à faire varier la durée de la phase de démagnétisation par un régulateur C" agissant sur l'interrupteur K3.

L'ensemble K3, D'p peut être monté indifféremment sur les bobinages principaux primaire ou secondaire du transformateur conventionnel ou encore sur un bobinage auxiliaire d'un transformateur particulier. Le choix de l'enroulement sur lequel agit directement la régulation est lié au meilleur compromis entre le courant circulant dans l'interrupteur K3 et la tension à ses bornes.

Il est à noter que dans toutes les formes d'exécution décrites du convertisseur statique pour la mise en oeuvre du procédé, l'inductance L faisant partie de la source de courant IQS peut être intégrée dans Ou constituée par, l'inductance de fuite du transformateur d'intensité T.P.

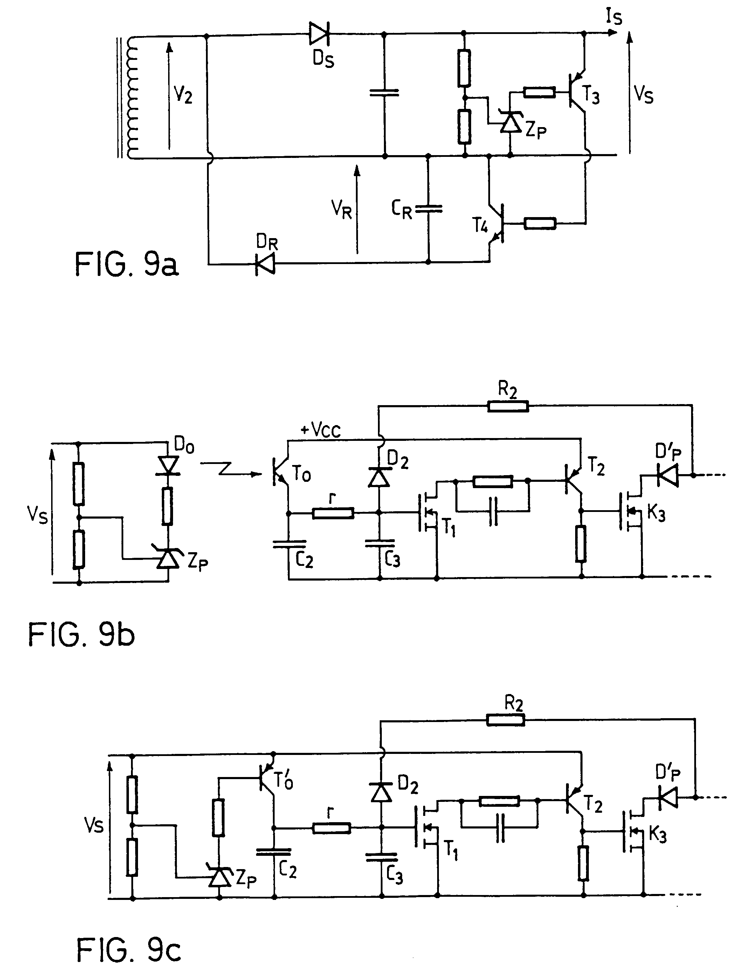

Le régulateur C illustré à la figure 9a est utilisé dans la première forme d'exécution du convertisseur statique illustré à la figure 4. Il comporte une diode Dr qui véhicule l'énergie de démagnétisation du transformateur d'intensité T.P. et un transistor T4 qui dissipe cette énergie.

Lorsque la tension Vs tend à augmenter, le transistor T4 conduit et décharge le condensateur CR de sorte que la tension de démagnétisation diminue. Le matériau magnétique tend à se saturer. Il passe alors moins d'énergie et la tension VS tend à décroître. Le point de fonctionnement est stable.

Le régulateur C' illustré à la figure 9b est utilisé dans la variante du convertisseur statique illustré à la figure 7a. Il comporte une tension de référence Vref qui est générée par une diode Zener programmable Zp. Le courant dans la diode Do de l'optocoupleur évolue dans le même sens que (Vs-Vref), si Vs est la tension de sortie du convertisseur.

Le phototransistor To associé à la diode Do se comporte comme une source de courant qui charge le condensateur C2. C2 est alors une source de tension dont l'amplitude augmente avec la tension Vs.

Le circuit formé par les composants r, C3, D2 et R2 applique une tension en dent de scie sur la grille du transistor T1 qui conduit à partir de son seuil de commande, produisant ainsi la saturation du transistor T2 et la conduction de l'interrupteur K3.

L'interrupteur K3 est actionné en synchronisme avec l'interrupteur K1 et sa durée de conduction est d'autant plus longue à chaque période que la tension de sortie Vs est grande.

Le régulateur C" illustré à la figure 9c est utilisé dans la variante du convertisseur statique illustrée à la figure 7b, dans laquelle l'interrupteur K3 et la diode D'p sont branchés en parallèle avec l'enroulement secondaire du transformateur T.P. Dans ce cas il n'y a pas besoin d'isolement galvanique. Le régulateur C" est donc semblable au régulateur C', l'optocoupleur (To,Do) étant remplacé par un simple transistor bipolaire pnp To'.

## Revendications

1. Procédé magnétique de contrôle du transfert d'énergie dans un convertisseur statique comprenant une entrée et une sortie, au moins un transformateur (T.P.) muni d'enroulements primaire et secondaire bobinés sur un circuit magnétique du transformateur, un circuit de réglage (C) destiné à régler ledit transfert d'énergie et une source de courant alternatif (IQS) appliquée à l'enroulement primaire du transformateur, caractérisé en ce qu'on agit au moyen du circuit de réglage sur l'état de saturation et de non-saturation de la totalité du circuit magnétique embrassé par l'ensemble des enroulements du transformateur (T.P.), qui fonctionne en tant que régulateur-interrupteur contrôlant le transfert d'énergie de l'entrée vers la sortie du convertisseur, la totalité du circuit magnétique du transformateur (T.P.) étant par action dudit circuit de réglage (C) saturée pendant une fraction de période entraînant l'égalité du courant magnétisant (Im) du transformateur et du courant qui circule dans l'enroulement primaire de façon que sensiblement aucun courant (i2) ne circule dans l'enroulement secondaire supprimant ledit transfert d'énergie, puis non saturée pendant l'autre fraction de période rendant le courant magnétisant (im) du transformateur inférieur au courant (ip) qui circule dans l'enroulement primaire de façon qu'un courant (i2) est induit dans l'enroulement secondaire pour engendrer un transfert d'énergie réglé par la durée des phases de saturation et de non saturation.

2. Procédé selon la revendication 1, caractérisé par le fait qu'on contrôle, à l'aide du circuit de réglage (C), la tension aux bornes d'un des bobinages du transformateur pendant la phase de saturation ou de non-saturation de son circuit magnétique à partir d'un paramète courant, tension ou puissance de l'enroulement secondaire ou de sortie du transformateur.

3. Procédé selon la revendication 1, caractérisé par le fait qu'on règle, à l'aide du circuit de réglage (C), la durée de la saturation ou de la non-saturation du circuit magnétique du transformateur.

4. Procédé selon l'une des revendications 1 à 3, caractérisé par le fait que le circuit de réglage (C;C') agit sur l'enroulement primaire du transformateur.

5. Procédé selon l'une des revendications 1 à 3, caractérisé par le fait que le circuit de réglage (C'') agit sur l'enroulement secondaire du transformateur.

6. Procédé selon l'une des revendications 1 à 3, caractérisé par le fait que le circuit de réglage agit sur un enroulement auxiliaire du transformateur.

7. Procédé selon l'une des revendications précédentes pour le contrôle du transfert d'énergie dans un convertisseur comprenant plusieurs transformateurs d'intensité dont les enroulements primaires sont en série, caractérisé par le fait qu'on règle de façon indépendante à l'aide d'un circuit de réglage ($C_1,C_2$) particulier l'état de saturation ou de non-saturation du circuit magnétique de chaque transformateur en fonction du transfert d'énergie désiré pour le transformateur envisagé à partir d'un paramètre de l'enroulement secondaire du transformateur considéré.

8. Convertisseur statique pour la mise en oeuvre du procédé selon la revendication 1 comprenant une entrée et une sortie, au moins un transformateur (T.P.) muni d'enroulements primaire et secondaire bobinés sur un circuit magnétique du transformateur, un circuit de réglage (C) destiné à régler le transfert d'énergie de l'entrée vers la sortie et une source de courant alternatif (IQS) appliquée à l'enroulement primaire du transformateur, caractérisé par le fait que le circuit de réglage (C) est agencé de façon à agir, à partir d'un paramètre, courant, tension ou puissance de l'enroulement secondaire, sur l'état de saturation et de non-saturation de la totalité du circuit magnétique embrassé par l'ensemble des enroulements du transformateur (T.P.) qui fonctionne en tant que régulateur-interrupteur contrôlant le transfert d'énergie, le circuit de réglage (C) étant susceptible de saturer pendant une fraction de période la totalité du circuit magnétique pour supprimer le transfert d'énergie et de ne pas saturer pendant l'autre fraction de période la totalité du circuit magnétique pour engendrer le transfert d'énergie souhaité, réglé par la durée des phases de saturation et de non saturation.

9. Convertisseur statique selon la revendication 8, caractérisé par le fait qu'il comporte plusieurs transformateurs d'intensité dont les enroulements primaires sont en série; l'enroulement secondaire de chaque transformateur pilotant un circuit de réglage ($C_1,C_2$) de l'état de saturation et de non-saturation du circuit magnétique du transformateur correspondant.

**Patentansprüche**

1. Magnetisches Verfahren zur Steuerung der Energieübertragung in einem statischen Umformer mit einem Eingang und einem Ausgang, zumindest einem Transformator (T.P.), der mit auf einen magnetischen Kreis des Transformators aufgespulten Primär- und Sekundärwicklungen versehen ist, einem Regelkreis (C), der zur Regelung der benannten Energieübertragung bestimmt ist, und einer Wechselstromquelle (IQS), die an die Primärwicklung des Transformators angeschlossen ist, dadurch gekennzeichnet, dass man über den Regelkreis auf den Sättigungs- bzw. Nichtsättigungszustand des gesamten, vom Komplex der Wicklungen des Transformators (T.P.) umgebenen magnetischen Kreises einwirkt, wobei der Transformator als Regler und Unterbrecher wirkt, der die Energieübertragung vom Eingang zum Ausgang des Umformers steuert und der gesamte magnetische Kreis des Transformators (T.P.) auf Grund der Wirkung des benannten Regelkreises (C) während eines Teiles der Schwingungsdauer gesättigt ist, was Gleichheit des Magnetisierungsstromes (Im) des Transformators und des in der Primärwicklung fliessenden Stroms nach sich zieht, wodurch im wesentlichen kein Strom (i2) in der Sekundärwicklung fliesst und die benannte Energieübertragung unterdrückt ist, und dass er dann während des verbleibenden Teiles der Schwingungsdauer ungesättigt ist, wodurch der Magnetisierungsstrom (im) des Transformators unter den Strom (ip) absinkt, der in der Primärwicklung fliesst, so dass ein Strom (i2) in der Sekundärwicklung induziert wird, um eine durch die Zeitdauer der Sättigungs- und Nichtsättigungsphase geregelte Energieübertragung zu bewirken.

2. Verfahren gemäss Anspruch 1, dadurch gekennzeichnet, dass mit Hilfe des Regelkreises (C) die Spannung an den Klemmen einer der Transformatorwicklungen während der Sättigungs- oder Nichtsättigungsphase seines magnetischen Kreises durch einen der Parameter Strom, Spannung oder Leistung der Sekundärwicklung oder des Ausgangs des Transformators gesteuert wird.

3. Verfahren gemäss Anspruch 1, dadurch gekennzeichnet, dass mit Hilfe des Regelkreises (C) die Zeitdauer der Sättigung oder Nichtsättigung des magnetischen Kreises des Transformators geregelt wird.

4. Verfahren gemäss einem der Ansprüche 1 bis 3, dadurch gekennzeichnet, dass der Regelkreis (C; C') auf die Primärwicklung des Transformators wirkt.

5. Verfahren gemäss einem der Ansprüche 1 bis 3, dadurch gekennzeichnet, dass der Regelkreis (C") auf die Sekundärwicklung des Transformators wirkt.

6. Verfahren gemäss einem der Ansprüche 1 bis 3, dadurch gekennzeichnet, dass der Regelkreis auf eine Zusatzwicklung des Transformators wirkt.

7. Verfahren gemäss einem der vorangehenden Ansprüche zur Steuerung der Energieübertragung in einem Umformer mit mehreren Stromtransformatoren, deren Primärwicklungen hintereinander geschaltet sind, dadurch gekennzeichnet, dass in unabhängiger Weise mit Hilfe jeweils eines besonderen Regelkreises ($C_1$, $C_2$) der Sättigungs- bzw. Nichtsättigungszustand des magnetischen Kreises jedes Transformators in Abhängigkeit von der für den jeweiligen Transformator gewünschten Energieübertragung durch einen Parameter der Sekundärwicklung dieses Transformators geregelt wird.

8. Statischer Umformer für die Durchführung des Verfahrens gemäss Anspruch 1 mit einem Eingang und einem Ausgang, zumindest einem Transformator (T.P.), der mit auf einen magnetischen Kreis des Transformators aufgespulten Primär- und Sekundärwicklungen versehen ist, einem Regelkreis (C), der zur Regelung der Energieübertragung vom Eingang zum Ausgang bestimmt ist, und einer Wechselstromquelle (IQS), die an die Primärwicklung des Transformators angeschlossen ist, dadurch gekennzeichnet, dass der Regelkreis (C) so aufgebaut ist, dass er ausgehend von einem der Parameter Strom, Spannung oder Leistung der Sekundärwicklung auf den Sättigungs- bzw. Nichtsättigungszustand des gesamten, vom Komplex der Wicklungen des Transformators (T.P.) umgebenen magnetischen Kreises einwirkt, wobei der Transformator als Regler und Unterbrecher wirkt, der die Energieübertragung steuert, und der Regelkreis (C) imstande ist, während des Teiles der Schwingungsdauer den gesamten magnetischen Kreis zu sättigen, um die Energieübertragung zu unterdrücken, aber während des verbleibenden Teiles der Schwingungsdauer den gesamten magnetischen Kreis nicht zu sättigen, um die gewünschte, durch die Zeitdauer der Sättigungs- und Nichtsättigungsphase geregelte Energieübertragung zu bewirken.

9. Statischer Umformer gemäss Anspruch 8, dadurch gekennzeichnet, dass er mehrere Stromtransformatoren umfasst, deren Primärwicklungen hintereinander geschaltet sind, wobei die Sekundärwicklung jedes Transformators einen Regelkreis ($C_1$, $C_2$) für den Sättigungs- bzw. Nichtsättigungszustand des magnetischen Kreises dieses Transformators steuert.

**Claims**

1. A magnetic method for controlling the transfer of energy in a static converter including an input and an output, at least one transformer (T. P.) provided with a primary and a secondary windings wound on a magnetic circuit of the transformer, a control circuit (C) designed for controlling said transfer of energy and a source of alternating current (IQS) applied to the primary winding of the transformer, characterized in that the control circuit is used to act on the state of saturation and non-saturation of the totality of the magnetic circuit comprising the totality of the windings of the transformer (T. P.), which functions as a regulator-switch controlling the transfer of energy from the input to the output of the converter, the totality of the magnetic control circuit of the transformer (T. P.) being, by the action of said control circuit (C), saturated during a fraction of a period to produce the equality of the magnetizing current (Im) of the transformer and of the current flowing in the primary winding so that substantially no current (i2) circulates in the secondary winding, thus suppressing said transfer of energy, then non-saturated during another fraction of the period making the magnetizing current (im) of the transformer lower than the current (ip) which circulates in the primary winding so that a current (i2) is induced in the secondary winding to generate a transfer of energy controlled by the duration of the saturation and non-saturation phases.

2. A method according to claim 1, characterized in that the control circuit (C) is used to control the voltage at the terminals of one of the windings of the transformer during the saturation or the non-saturation phase of its magnetic circuit, on the basis of the parameter current, voltage or power of the secondary winding or of the output of the transformer.

3. A method according to claim 1, characterized in that the control circuit (C) is used to control the duration of the saturation or non-saturation of the magnetic circuit of the transformer.

4. A method according to one of claims 1 to 3, characterized in that the control circuit (C; C') acts on the primary winding of the transformer.

5. A method according to one of claims 1 to 3, characterized in that the control circuit (C") acts on the secondary winding of the transformer.

6. A method according to one of claims 1 to 3, characterized in that the control circuit acts on an auxiliary winding of the transformer.

7. A method according to one of the preceding claims for the control of the transfer of energy in a converter comprising several current transformers having series mounted primary windings, characterized in that a special control circuit ($C_1$, $C_2$) is used to control independently the state of saturation or non saturation of the magnetic circuit of each transformer, according to the transfer of energy desired for the transformed considered, on the basis of a parameter of the secondary winding of the transformer considered.

8. A static converter for carrying out the method according to claim 1, including an input and an output, at least one transformer (T. P.) provided with a primary and a secondary windings wound on a magnetic circuit of the transformer, a control circuit (C) designed for controlling the transfer of energy from the input and the output and a source of alternating current (IQS) applied to the primary winding of the transformer, characterized in that the control circuit (C) is arranged to act, on the basis of parameters such as the current, the voltage or the power of the secondary winding, on the state of saturation and non-saturation of the totality of the magnetic circuit comprising the totality of the windings of the transformer (T. P.), which functions as a regulator-switch controlling the transfer of energy, the control circuit (C) being capable of saturating, during a fraction of the period, the totality of the magnetic circuit to suppress the transfer of energy and of not saturating, during the other fraction of the period, the totality of the magnetic circuit, to generate the transfer of energy desired, regulated by the duration of the phases of saturation and non-saturation.

9. A Static converter according to claim 8, characterized in that it includes several current transformers having series mounted primary windings; the secondary winding of each transformer driving a circuit ($C_1$, $C_2$) controlling the state of saturation or non-saturation of the magnetic circuit of the corresponding transformer.

FIG.1

FIG. 2

FIG. 3a

FIG. 3b

FIG. 4

FIG. 5a

FIG. 5b

FIG. 6

FIG. 7a

FIG. 7b

FIG. 8b

FIG. 8a

FIG. 9a

FIG. 9b

FIG. 9c